Europäisches Patentamt

European Patent Office

Office européen des brevets

(11) Veröffentlichungsnummer: **0 387 190**
**A1**

(12) # EUROPÄISCHE PATENTANMELDUNG

(21) Anmeldenummer: **90810112.4**

(51) Int. Cl.⁵: **B65G 69/28**

(22) Anmeldetag: **15.02.90**

(30) Priorität: **24.02.89 CH 685/89**

(43) Veröffentlichungstag der Anmeldung:
**12.09.90 Patentblatt 90/37**

(84) Benannte Vertragsstaaten:
**CH DE FR LI NL**

(71) Anmelder: **ALUSUISSE-LONZA SERVICES AG**
**Feldeggstrasse 4**
**CH-8034 Zürich(CH)**

(72) Erfinder: **Appelt, Georg**
**Reichenaustrasse 4**
**D-7760 Radolfzell(DE)**
Erfinder: **Schmidt, Walter**
**Liptingerstrasse 10**
**D-7706 Honstetten(DE)**

(54) **Mobile Überfahrbrücke mit selbsttätiger Abrutschsicherung.**

(57) Die Brücke dient dem Warenumschlag zwischen einer Rampe (32) und einer Ladefläche (78) von Strassen- oder Schienenfahrzeugen.

Im Bereich der Baulänge (b) der Ueberfahrbrücke (10) ist an deren beiden Längsseiten ein bei angelegter Brücke (10) nach unten wenigstens teilweise offenes U-Profil (12) aus einer Aluminiumlegierung oder Stahl befestigt. Das U-Profil (12) nimmt einen um eine einends in den Profilschenkeln (66, 67) gelagerte Drehachse (14) senkrecht zur Fahrfläche (46) begrenzt schwenkbaren Sicherungsarm (16) mit mehreren frei drehbaren, in axialer Richtung (A) jedoch nicht verschiebbaren Klinken (18) auf. Diese Klinken (18) verhindern im Bereich zwischen der Rampe (32) und der Fahrzeugladefläche (78) mit einer abkragenden, frei nach unten hängenden Klinkenlasche (34) ein Verrutschen der Ueberfahrbrücke (10) in Richtung der tieferliegenden Auflage (30) oder deren Verdrehen. Weiter stützen die im Bereich der tieferliegenden Auflage (30) selbsttätig umgelegten Klinken (18) den Sicherungsarm (16).

Fig. 1

## Mobile Ueberfahrbrücke mit selbsttätiger Abrutschsicherung

Die Erfindung bezieht sich auf eine mobile Ueberfahrbrücke mit selbsttätiger Abrutschsicherung für den Warenumschlag zwischen einer Rampe und einer Ladefläche von Strassen-oder Schienenfahrzeugen.

Zum Beladen oder Entladen werden Fahrzeuge möglichst nahe an eine Rampe gefahren. Der Warenumschlag erfolgt stückweise oder in Containern mit einfachen Handschubkarren, Palettenhubwagen oder motorisierten Gabelhubstaplern. Der Leerraum zwischen der Rampe und der Fahrzeugladefläche muss geeignet überbrückt werden. Im Normalfall sind die Rampe und die Fahrzeugladefläche nicht gleich hoch, die Niveauunterschiede liegen in der Regel in einem Bereich von 0 - 20 cm, wobei die Fahrzeugladefläche höher oder tiefer als die Rampe liegen kann.

Für Handschubkarren genügen oft einfache Bleche, für Palettenhubwagen oder insbesondere Gabelhubstapler sind jedoch Ueberfahrbrücken von hoher Tragkraft notwendig, die auch einer grossen Punktbelastung widerstehen.

Neben einer genügenden Tragfähigkeit ist darauf zu achten, dass die Ueberfahrbrücke bei mehrmaligem Befahren nicht verschoben wird, insbesondere in Richtung der tieferliegenden Auflagefläche.

Ueberfahrbrücken von hoher Tragfähigkeit bestehen aus einer hochfesten Aluminiumlegierung oder Stahl, wobei zur Verstärkung Hohlfachprofile ausgebildet oder Unterzüge zugeordnet sein können.

Da in Querrichtung verlaufende, auf der Unterlage aufliegende Gummileisten ein Verrutschen nicht immer und nicht vollständig verhindern können, wurden Ueberfahrbrücken seit langer Zeit mit Anschlagleisten und schwenkbaren Arretierungen ausgerüstet. Von Hand einstellbare Sicherungsanschläge sind jedoch aufwendig.

Neuere bekannte Ausführungsformen von Ueberfahrbrücken weisen deshalb eine selbsttätige Abrutschsicherung auf.

Nach einer ersten Variante ist etwa in der Längsmitte, unterhalb der Ueberfahrbrücke, ein schwenkbarer Sicherungsarm angeordnet. Dieser Sicherungsarm enthält mehrere vertikal in Bohrungen geführte, in ihrer Längsrichtung verschiebbare Bolzen. Ragt der Sicherungsarm über die Verlängerungskante der stützenden Rampe oder Fahrzeugladefläche in den Zwischenraum hinaus, fallen die betreffenden Bolzen nach unten und bilden eine Sperre. Diese Ausführungsform weist den Nachteil auf, dass wegen des in der Mitte angeordneten Sicherungsarms die Ueberfahrbrücke abgedreht werden kann. Weiter können die Sicherungsbolzen verkanten oder verklemmen, wobei sie nicht hinunterfallen und daher ihre Funktion nicht erfüllen können. Für den Benützer der Ueberfahrbrücke ist nicht oder schlecht kontrollierbar, ob die Bolzen tatsächlich hinuntergefallen sind und die Ueberfahrbrücke gesichert ist.

Nach einer weiteren Variante werden zwei vollautomatische, im Seitenbereich der Ueberfahrbrücke angeordnete Sicherungsarme mit Sperrklinken verwendet. Diese legen sich selbsttätig gegen die Rampenvorderkante. Nach dieser Ausführungsform müssen die Klinken die Kraft in ihrer Schwenkrichtung auffangen, was ungünstig ist.

Die Erfinder haben sich die Aufgabe gestellt, eine mobile Ueberfahrbrücke der eingangs genannten Art zu schaffen, welche eine selbsttätige Abrutschsicherung aufweist, die bei allen Brückentypen eine hohe Funktionssicherheit aufweist, auf die Ueberfahrbrücke einwirkende Verschiebungs kräfte optimal aufnimmt und mit geringem Aufwand herstellbar ist.

Die Aufgabe wird erfindungsgemäss dadurch gelöst, dass im Bereich der Baulänge der Ueberfahrbrücke an deren beiden Längsseiten ein bei eingelegter Brücke nach unten wenigstens teilweise offenes U-Profil aus einer Aluminiumlegierung oder Stahl befestigt ist, welches U-Profil einen um eine einends in den Profilschenkeln gelagerte Drehachse senkrecht zur Fahrfläche begrenzt schwenkbaren Sicherungsarm mit mehreren frei drehbaren, in axialer Richtung jedoch nicht verschiebbaren Klinken aufnimmt, wobei die Klinken im Bereich zwischen der Rampe und der Fahrzeugladefläche mit einer abkragenden, frei nach unten hängenden Klinkenlasche ein Verrutschen der Ueberfahrbrücke in Richtung der tieferliegenden Auflage oder ein Verdrehen verhindert, und die im Bereich der tieferliegenden Auflage selbsttätig umgelegten Klinken den Sicherungsarm stützen.

Die Ueberfahrbrücke wird so über den freien Raum zwischen der Rampe und der Fahrzeugladefläche gelegt, dass eine Anschlagleiste an die Ladekante der höherliegenden Auflage geschoben und der Sicherungsarm auf der tieferliegenden Auflage abstützt, wobei die im Bereich der Auflage angeordneten Klinken abgedreht sind. Die übrigen, im freien Raum zwischen der Rampe und dem Fahrzeug angeordneten Klinken hängen mit ihren Klinkenlaschen nach unten.

Bei einem Verrutschen der Ueberfahrbrücke in Richtung der tieferliegenden Auflagefläche stösst beidseits der Ueberfahrbrücke die den abgedrehten Klinken am nächsten liegende, frei hängende Klinke an die untere Ladekante und verhindert ein weiteres Rutschen der Ueberfahrbrücke. Die Verschiebungskraft wirkt hier nicht in der Schwenkrichtung der Klinken, sondern in axialer Richtung.

Die seitlichen U-Profile sind vorzugsweise mit der Fahr fläche der Ueberfahrbrücke bündig angeordnet, sie sind aufgesteckt, angeschweisst und/oder angeschraubt. In Führungen aufgesteckte und mit einem Bolzen oder einer Schraube gesicherte sowie angeschraubte U-Profile sind entfernbar. Sie können also von einer defekten Ueberfahrbrücke entfernt und an einer anderen angebracht werden.

Ueberfahrbrücken, welche nicht einfache Bleche sind, können wegen ihres Gewichts nicht oder nicht stets von Hand getragen werden. Es ist bekannt, Ueberfahrbrücken verrollbar zu machen, indem beispielsweise Kunststoffrollen angebracht werden. Hochgestellt kann eine Ueberfahrbrücke von einer Person leicht transportiert werden. Verrollbare Ueberfahrbrücken gemäss der vorliegenden Erfindung haben in einem oder in beiden U-Profilen zwei Rollen, welche durch Profilöffnungen seitlich austreten. Beim Verrollen der hochgestellten Ueberfahrbrücke kann das obere U-Profil als Handgriff verwendet werden.

Die Vorteile der erfindungsgemässen Ueberfahrbrücke können wie folgt zusammengefasst werden:

- Die Abrutschsicherung erfolgt in optimaler Weise, weil die Sicherungsarme im äussersten Seitenbereich angeordnet sind und die Kraftübertragung auf die Klinken nicht in deren Schwenkrichtung erfolgt.
- Die Sicherungsarme müssen nicht direkt an der eigentlichen Ueberfahrbrücke befestigt werden.
- Zwei Typen von U-Profilen in je einer linken und einer rechten Ausführungsform, welche einen integrierten Sicherungsarm haben, genügen für alle Varianten von Ueberfahrbrücken. Die U-Profile können auch vormontierte Laufrollen haben und als Handgriff dienen.
- Die U-Profile können an der Ueberfahrbrücke lösbar befestigt oder mit dieser verschweisst werden.

Die Erfindung wird anhand der in der Zeichnung dargestell ten Ausführungsbeispiele näher erläutert. Es zeigen schematisch:

- Fig. 1 eine Seitenansicht eines U-Profils mit auf einer Unterlage aufliegendem Sicherungsarm,
- Fig. 2 eine Ansicht einer Ueberfahrbrücke, von unten,
- Fig. 3 einen Schnitt durch ein an eine Ueberfahrbrücke angeschweisstes U-Profil,
- Fig. 4 einen Schnitt durch ein weiteres angeschweisstes U-Profil,
- Fig. 5 einen vertikalen Längsschnitt durch das tieferliegende Ende der Ueberfahrbrücke, und
- Fig. 6 eine aufgeschnittene Ansicht des oberen Endes der Ueberfahrbrücke mit einem Teil der Abrutschsicherung.

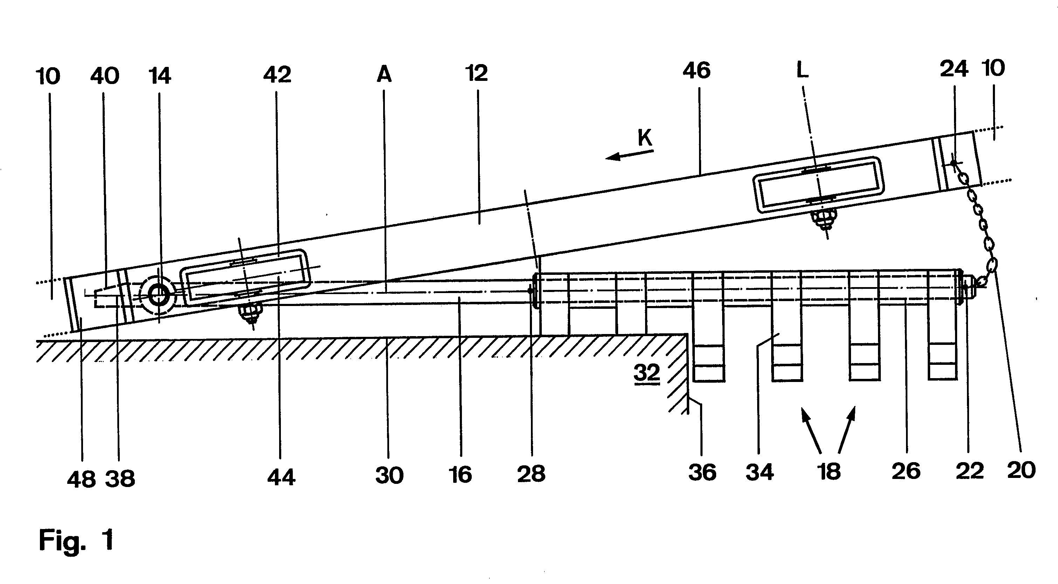

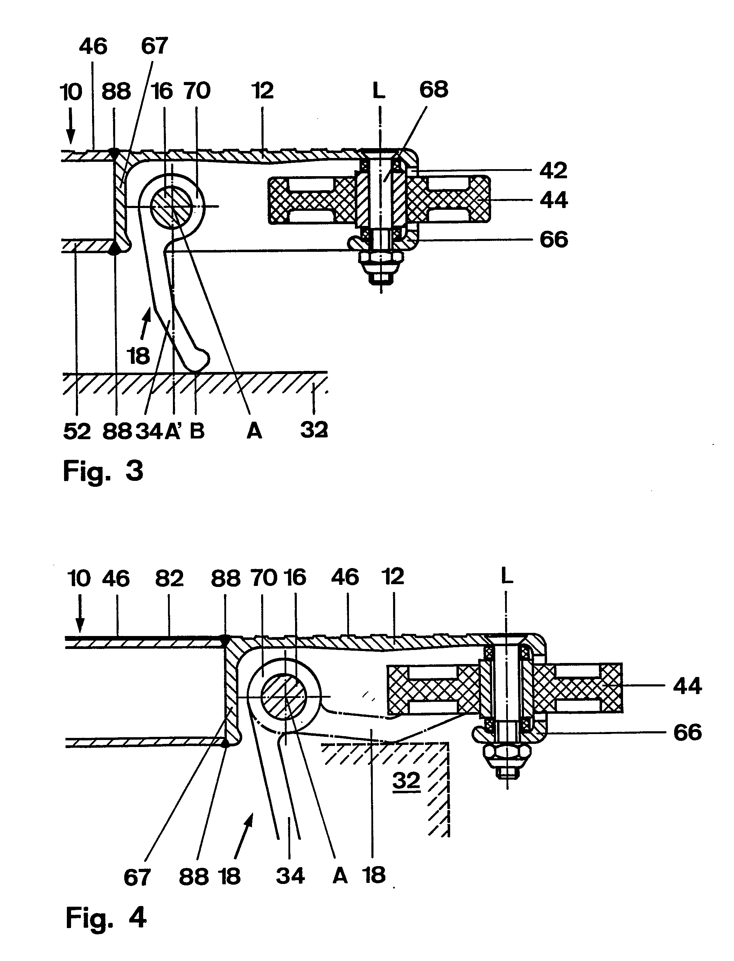

In Fig. 1 ist eine Abrutschsicherung dargestellt, welche an jedem Typ von Ueberfahrbrücke lösbar oder unlösbar befestigt werden kann. Eine solche Ueberfahrbrücke 10 ist beidseits eines U-Profils 12 (vgl. Fig. 3 und 4) mit einigen Punkten angedeutet. In den Schenkeln des U-Profils ist eine Drehachse 14 für den ausgeschwenkten Sicherungsarm 16 gelagert. Dieser ist mindestens im Bereich der Klinken 18 in Form eines Rundstabes oder eines Rohrs, vorzugsweise aus Stahl, ausgebildet.

Eine Kette 20 beschränkt den Schwenkbereich des Sicherungsarms 16. Die Kette ist am Sicherungsbolzen 22 für die Klinken 18 und am Bolzen 24 für eine nicht dargestellte, an sich bekannte Einschnappvorrichtung im U-Profil 12 befestigt. Diese Einschnappvorrichtung dient der Festlegung des im U-Profil 12 aufgenommenen Sicherungsarms 16.

Die sechs Klinken 18 sind durch Distanzhülsen 26 voneinander getrennt. Die Klinken 18 sind auf dem Sicherungsarm 16 frei drehbar, in Richtung der Längsachse A können sie jedoch nicht verschoben werden. Ein zweiter, den Sicherungs arm 16 durchgreifender Sicherungsbolzen 28 verhindert dies im Zusammenwirken mit dem Sicherungsbolzen 22 und den Distanzhülsen 26.

Die tieferliegende Auflage 30, im vorliegenden Fall die Rampe 32, bewirkt, dass die beiden in bezug auf die Ueberfahrbrücke 10 innenliegenden Klinken 18 beim gravitationsbedingten Absenken des Sicherungsarms 16 gedreht werden. Diese beiden selbsttätig gedrehten Klinken 18 bilden die Auflage für den Sicherungsarm 16 auf der Rampe 32.

Die anderen vier Klinken 18 hängen mit der abkragenden Klinkenlasche 34 hinunter und übergreifen die Ladekante 36.

Wirkt eine Kraft in Richtung des Pfeils K auf die Ueberfahrbrücke 10 ein, so wird die Kraft auf das U-Profil 12 und über die Drehachse 14 auf den Sicherungsarm 16 übertragen. Bei genügend grosser Kraft wird die ganze Ueberfahrbrücke verschoben, bis die innerste herunterhängende Klinke 18 an der Ladekante 36 anschlägt. Selbst bei Anwendung von sehr grossen Kräften kann nun die Ueberfahrbrücke nicht mehr weiter bewegt werden, da auf der andern als in Fig. 1 gezeigten Längsseite der Ueberfahrbrücke 10 ebenfalls eine Abrutschsicherung angebracht ist.

Der als zweiarmiger Hebel ausgebildete Sicherungsarm 16 weist auf der Seite des kurzen Hebelarms 38 einen Gegenanschlag 40 auf, welcher bei fehlender oder nicht eingehängter Kette 20 den Schwenkbereich des Sicherungsarms 16 beschränkt.

Aus zwei Längsschlitzen 42 im äusseren Schenkel des U-Profils ragt je eine Laufrolle 44 aus einem Polyamid heraus. Die Achse L der Laufrollen verläuft vertikal zur Fahrfläche 46 der Ueberfahrbrücke 10 und des U-Profils 12.

Das U-Profil weist beidends eine Abschrägung 48 auf, welche wegen der besseren Handlichkeit angebracht ist.

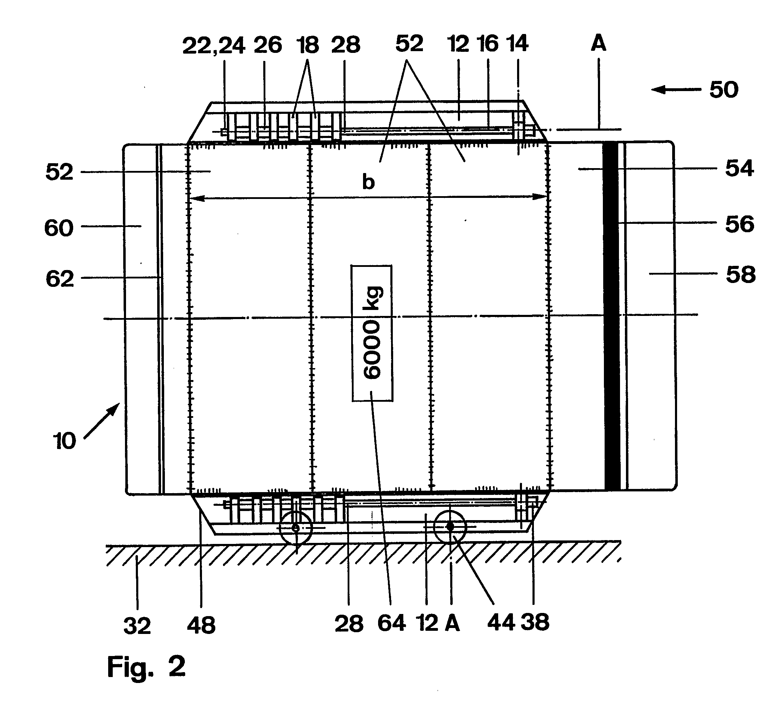

Fig. 2 zeigt eine Ueberfahrbrücke 10, die auf der Rampe 32 in Richtung des Pfeils 50 zu einem bereitstehenden, nicht dargestellten Fahrzeug geschoben wird. Die von unten betrachtet dargestellte Ueberfahrbrücke 10 stützt in aufrechter Position auf den Laufrollen 44 ab und kann in Längsrichtung leicht verschoben werden, indem der Benutzer das obere U-Profil 12, welches im vorliegenden Fall keine Rollen 44 aufweist, als bequemen Handgriff benutzt.

Die beiden seitlichen U-Profile 12 erstrecken sich über die Baulänge b der dreiteiligen Ueberfahrbrücke und sind mit dieser verschweisst. Die Ueberfahrbrücke 10 und U-Profile 12 bestehen aus einer hochfesten Aluminium-Magnesium-Siliziumlegierung.

An die drei miteinander verschweissten Hohlfachprofile 52 ist auf der Hinterseite ein Trägerprofil 54 mit einem sich über die ganze Breite der Ueberfahrbrücke 10 erstreckenden Gummiprofil 56 angeschweisst. Im Trägerprofil 54 schwenkbar gelagert ist ein Auffahrprofil 58.

Auf der Vorderseite ist ein Auflageprofil 60 mit dem betreffenden Hohlfachprofil 52 verschweisst. Eine Anschlagleiste 62 erstreckt sich über die ganze Breite der Ueberfahrbrücke 10.

Ein am mittleren Hohlfachprofil 52 angebrachtes Beschriftungsschild 64 zeigt gut sichtbar die zulässige Tragkraft an.

Das in Fig. 3 dargestellte U-Profil 12 ist im Bereich des inneren Schenkels 67 über Schweissnähte 66 mit einem Hohlfachprofil 52 verbunden. Die Fahrfläche 46 ist zur Erhöhung des Gleitschutzes geriffelt, ebenfalls im Bereich des U-Profils 12.

Der in bezug auf die Ueberfahrbrücke 10 äussere Schenkel 66 des U-Profils 12 verläuft im Endbereich rechtwinklig nach innen und bedeckt einen Teil der nach unten gerichteten Oeffnung des U-Profils 12. Durch den Längsschlitz 42 im äusseren Schenkel 66 ist eine Laufrolle 44 geführt, welche eine senkrecht zur Fahrfläche 46 verlaufende Achse L hat. Die Laufrolle 44 ist mittels einer Schraube 68 im U-Profil 12 befestigt.

Die Klinke 18 ist in Form eines den Sicherungsarm 16, hier als Rundstab vorliegend, umschliessenden Rings 70 mit einem tangential angeformten, etwa im Bereich der Längsmitte in bezug auf die Ueberfahrbrücke 10 nach aussen abgewinkelten oder abgebogenen Klinkenlasche 34 ausgebildet. Das Ende der Klinkenlasche ist vorzugsweise abgerundet.

Fig. 3 ist eine Momentandarstellung des sich absenkenden U-Profils 12 mit eingezogenem Sicherungsarm 16 und frei hängenden Klinken 18. Das Ende der Klinkenlasche 34 der gezeichneten Klinke 18 berührt gerade die Rampe 32. Die Klinke 18 ist noch in derselben Position, wie sie vorher frei hängend war, d.h. der Schwerpunkt der Klinke 18 liegt vertikal unter der Längsachse A des Sicherungsarms 16. Der Schnittpunkt A' der Vertikalen zur Rampe 32 durch die Längsachse A liegt neben dem Berührungspunkt B der Klinkenlasche 34 mit der Rampe 32. Wird das U-Profil 12 weiter abgesenkt, gleitet die Klinkenlasche 34 auf der Rampe 32, bis die in Fig. 4 gestrichelt bzw. punktiert angedeutete Lage erreicht ist. Mit ausgezogenem Strich ist der obere Teil einer Klinkenlasche 34 gezeigt, welche neben der Rampe 32 frei hängt.

Die Fahrfläche 46 der in Fig. 4 gezeigten Ueberfahrbrücke wird durch eine Antigleitschicht 82 gebildet.

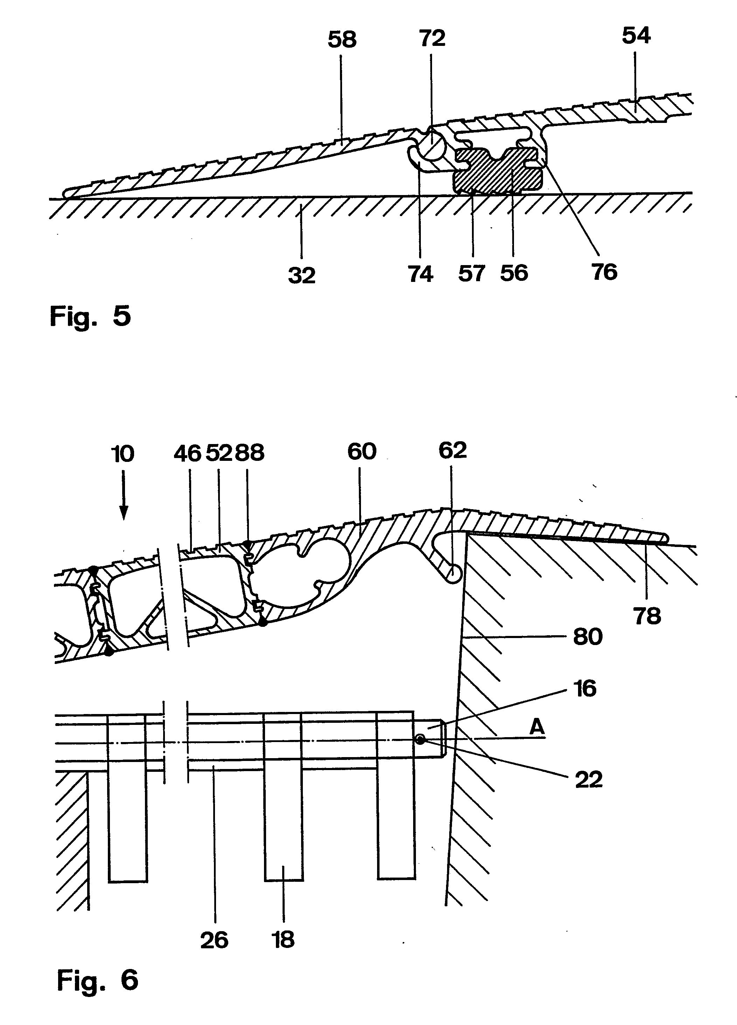

Das in Fig. 5 dargestellte tieferliegende Ende der Ueberfahrbrücke besteht aus einem Trägerprofil 54 und einem ge lenkig damit verbundenen Auffahrprofil 58. Dieses hat ein im Querschnitt kreisförmiges Kopfteil 72, welches in einer Pfanne 74 des Trägerprofils 54 schwenkbar ist.

Das Trägerprofil 54 liegt einem Gummiprofil 56 auf, welches seinerseits auf der Rampe 32 abstützt. Das Gummiprofil 56 ist in Profilfahnen 76 des Trägerprofils 54 verzahnt. Zwecks besserer Haftung mit der Rampe 32 weist das Gummiprofil 56 längslaufende Zähne 57 auf.

Das in Fig. 6 dargestellte obere Ende der Ueberfahrbrücke 10 liegt auf der höherliegenden Auflage, der Ladefläche 78 des Fahrzeugs, auf. Das oberste Hohlfachprofil 52 mit einer geriffelten Fahrfläche 46 ist über Schweissnähte 88 mit dem Auflageprofil 60 verbunden. Dieses stösst mit einer Anschlagleiste 62 an die Ladekante 80 des Fahrzeugs. Damit ist eine Verschiebung der Ueberfahrbrücke 10 in dieser Richtung ausgeschlossen.

Selbstverständlich kann die Ladefläche 78 des Fahrzeugs auch tieferliegen als die Rampe 32. In diesem Fall wird die Ueberfahrbrücke 10 um 180° gedreht angelegt.

Schliesslich ist in Fig. 6 noch die Abrutschsicherung erkennbar. Die Ladebrücke 10 kann nur wenig in Richtung der Rampe 32 verschoben werden, dann stösst die der Rampe 32 benachbarte Klinke 18 auf die Ladekante 36 und blockiert die Ueberfahrbrücke.

## Ansprüche

1. Mobile Ueberfahrbrücke (10) mit selbsttätiger Abrutschsicherung für den Warenumschlag zwischen einer Rampe (32) und einer Ladefläche (78) von Strassen- oder Schienenfahrzeugen, dadurch gekennzeichnet, dass im Bereich der Baulänge (b) der Ueberfahrbrücke (10) an deren beiden Längsseiten ein bei angelegter Brücke (10) nach unten wenigstens teilweise offenes U-Profil (12) aus einer Aluminiumlegierung oder Stahl befestigt ist, welches U-Profil (12) einen um eine einends in den Profilschenkeln (66, 67) gelagerte Drehachse (14) senkrecht zur Fahrfläche (46) begrenzt schwenkbaren Sicherungsarm (16) mit mehreren frei drehbaren, in axialer Richtung (A) jedoch nicht verschiebbaren Klinken (18) aufnimmt, wobei die Klinken (18) im Bereich zwischen der Rampe (32) und der Fahrzeugladefläche (78) mit einer abkragenden, frei nach unten hängenden Klinkenlasche (34) ein Verrutschen der Ueberfahrbrücke (10) in Richtung der tieferliegenden Auflage (30) oder ein Verdrehen verhindern, und die im Bereich der tieferliegenden Auflage (30) selbsttätig umgelegten Klinken (18) den Sicherungsarm (16) stützen.

2. Ueberfahrbrücke nach Anspruch 1, dadurch gekennzeichnet, dass die seitlichen U-Profile (12) mit der Fahrfläche (46) der Ueberfahrbrücke (10) bündig und vorzugsweise aufgesteckt, angeschweisst und/oder angeschraubt sind.

3. Ueberfahrbrücke nach Anspruch 1. oder 2, dadurch gekennzeichnet, dass der aussenliegende Schenkel (66) der U-Profile (12) rechtwinklig nach innen verläuft und vorzugsweise zwei Längsschlitze (42) zur Aufnahme von im U-Profil (12) gelagerten Laufrollen (44) mit senkrecht zur Fahrfläche (46) verlaufenden Achsen (46) hat.

4. Ueberfahrbrücke nach einem der Ansprüche 1 - 3, dadurch gekennzeichnet, dass der in den U-Profilen (12) gelagerte Sicherungsarm (16) wenigstens im Bereich der Klinken (18) als Rundstab oder Rohr, vorzugsweise aus Stahl, ausgebildet ist.

5. Ueberfahrbrücke nach einem der Ansprüche 1 - 4, dadurch gekennzeichnet, dass der in den U-Profilen (12) gelagerte Sicherungsarm (16), zur Begrenzung des Schwenkbereichs, als zweiarmiger Hebel mit einem Gegenanschlag (40) ausgebildet ist und/oder ausserhalb der Klinken (18) über ein Seil oder eine Kette (20) mit dem U-Profil (12) verbunden ist.

6. Ueberfahrbrücke nach einem der Ansprüche 1 - 5, dadurch gekennzeichnet, dass der in den U-Profilen (12) in Ruhelage befindliche Sicherungsarm (16) mit einer Einschnappvorrichtung gehalten ist.

7. Ueberfahrbrücke nach einem der Ansprüche 1 - 6, dadurch gekennzeichnet, dass die auf den Sicherungsarmen (16) frei drehbaren Klinken (18) durch Distanzhülsen (26) getrennt, und die endständigen Klinken mit Sicherungsbolzen oder -stiften (22, 28) in Längsrichtung (A) des Sicherungsarms (16) fixiert sind.

8. Ueberfahrbrücke nach einem der Ansprüche 1 - 7, dadurch gekennzeichnet, dass pro Sicherungsarm (16) 3 - 10, vorzugsweise 5 - 7 Klinken (18) angeordnet sind.

9. Ueberfahrbrücke nach einem der Ansprüche 1 - 8, dadurch gekennzeichnet, dass die Klinken (18) in Form eines den Sicherungsarm (16) umschliessenden Rings (70) mit einem tangential angeformten, etwa im Bereich der Längsmitte in bezug auf die Ueberfahrbrücke (10) nach aussen abgewinkelten oder abgebogenen Klinkenlasche (34) mit vorzugsweise abgerundetem Ende bestehen.

10. Ueberfahrbrücke nach einem der Ansprüche 1 - 9, dadurch gekennzeichnet, dass die einstückigen Klinken (18) aus gegossenem, geschmiedetem oder von einem Profilstück abgelängtem Aluminium oder aus Kunststoff bestehen.

10  40  14          42      A      12                    46          L              24  10

K

EP 0 387 190 A1

48 38          44      30    16    28              36  34    18      26    22  20

32

**Fig. 1**

Fig. 2

22,24 26 18 28 52 12 16 14 A

← 50

52

b

6000 kg

52
60
62

10

54
56
58

32 48 28 64 12 A 44 38

EP 0 387 190 A1

Fig. 3

Fig. 4

**Fig. 5**

**Fig. 6**

Europäisches
Patentamt

**EUROPÄISCHER RECHERCHENBERICHT**

Nummer der Anmeldung

EP 90 81 0112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 027 781 (SCHWEIZERISCHE ALUMINIUM) <br> * Seite 3, Zeile 15 - Seite 5, Zeile 1; Figuren 1-5 * <br> --- | 1,4,8 | B 65 G 69/28 |
| A | FR-A-2 274 531 (ALTEN) <br> * Figur 1 * <br> --- | 1 | |
| A | US-A-3 192 546 (NOLAND) <br> * Figuren * <br> ----- | 1 | |
| | | | **RECHERCHIERTE SACHGEBIETE (Int. Cl.5)** <br><br> B 65 G |

Der vorliegende Recherchenbericht wurde für alle Patentansprüche erstellt

| Recherchenort | Abschlußdatum der Recherche | Prüfer |
|---|---|---|
| DEN HAAG | 05-06-1990 | OSTYN T.J.M. |